# EUROPÄISCHE PATENTANMELDUNG

(11) **EP 2 782 310 A1**
(43) Veröffentlichungstag der Anmeldung: **24.09.2014**
(21) Anmeldenummer: 13160167.6
(22) Anmeldetag: 20.03.2013
(51) Int. Cl.: H04L 29/06, G06K 7/08, G06K 19/077

(54) **Kommunikationssystem**

(71) Anmelder: Gigaset Communications GmbH, 81379 München (DE)
(72) Erfinder: Mösker, Volker, 46419 Isselburg (DE); Wewers, Ötger, 46395 Bocholt (DE)
(74) Vertreter: Michalski Hüttermann & Partner Patentanwälte mbB

(57) **Zusammenfassung**

Die Erfindung betrifft ein System (1) mit wenigstens zwei kommunikationstechnisch miteinander verbindbaren Kommunikationseinheiten (I, II), wobei wenigstens eine erste Kommunikationseinheit (I) zumindest einen Sensorbildschirm (2) und wenigstens eine zweite Kommunikationseinheit (II) zumindest eine Einrichtung (3) zur Stimulierung des Sensorbildschirms (2) aufweist, dadurch gekennzeichnet, dass die erste Kommunikationseinheit (I) wenigstens eine Sendeeinrichtung zur Aussendung von Datensignalen und die zweite Kommunikationseinheit (II) wenigstens eine Einrichtung (4) zur Erfassung dieser Datensignale aufweist, wobei das System (1) eingerichtet ist, Datensignale von der zweiten Kommunikationseinheit (II) über die Einrichtung (3) zur Stimulierung des Sensorbildschirms (2) und den Sensorbildschirm (2) an die erste Kommunikationseinheit (I) und Datensignale von der ersten Kommunikationseinheit (I) über die Sendeeinrichtung zur Aussendung der Datensignale und die Einrichtung (4) zur Erfassung der Datensignale an die zweite Kommunikationseinheit (II) zu übertragen.

## Beschreibung

Die vorliegende Erfindung betrifft ein System mit wenigstens zwei kommunikationstechnisch miteinander verbindbaren Kommunikationseinheiten, wobei wenigstens eine erste Kommunikationseinheit zumindest einen Sensorbildschirm und wenigstens eine zweite Kommunikationseinheit zumindest eine Einrichtung zur Stimulierung des Sensorbildschirms aufweist.

Ein entsprechendes System ist beispielsweise aus der Veröffentlichung TW M 432 105 U bekannt. Bei diesem System ist die erste Kommunikationseinheit beispielsweise als Smartphone mit einem kapazitiven Sensorbildschirm und die zweite Kommunikationseinheit als Karte ausgebildet. Die Karte enthält Komponenten, über die der Sensorbildschirm stimulierbar ist, wenn die Karte an den Sensorbildschirm angenähert wird. Die Kommunikation erfolgt gemäß diesem Stand der Technik unidirektional von der Karte zu dem Sensorbildschirm.

Aufgabe der Erfindung ist es, ein neuartiges und vielseitig einsetzbares System zu schaffen, welches insbesondere eine einfache und intuitive Autorisierung von Kommunikationseinheiten des Systems ermöglicht und somit auf einfache Art und Weise in Betrieb genommen werden kann.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben, die jeweils für sich genommen oder in verschiedener Kombination miteinander einen Aspekt der Erfindung darstellen können.

Erfindungsgemäß ist vorgesehen, dass die erste Kommunikationseinheit wenigstens eine Sendeeinrichtung zur Aussendung von Datensignalen und die zweite Kommunikationseinheit wenigstens eine Einrichtung zur Erfassung dieser Datensignale aufweist, wobei das System eingerichtet ist, Datensignale von der zweiten Kommunikationseinheit über die Einrichtung zur Stimulierung des Sensorbildschirms und den Sensorbildschirm an die erste Kommunikationseinheit und Datensignale von der ersten Kommunikationseinheit über die Sendeeinrichtung zur Aussendung der Datensignale und die Einrichtung zur Erfassung der Datensignale an die zweite Kommunikationseinheit zu übertragen. Grundidee der vorliegenden Erfindung ist es also, eine bidirektionale Kommunikation zwischen bestimmten Kommunikationseinheiten eines Systems zu ermöglichen, wodurch insbesondere eine automatische Autorisierung von Kommunikationseinheiten des Systems möglich ist. Durch eine Autorisierung von Kommunikationseinheiten wird die Sicherheit des Systems deutlich gegenüber Systemen erhöht, bei denen lediglich ein unidirektionaler Datenaustausch erfolgt und Rechte lediglich einseitig an Kommunikationseinheiten vergeben werden.

Die zweite Kommunikationseinheit kann beispielsweise eine Basiseinheit eines Systems sein, mit der eine oder mehrere erste Kommunikationseinheiten des Systems kommunizieren können. Hierzu können die ersten Kommunikationseinheiten über die erfindungsgemäße bidirektionale und kabellose Kommunikationsmöglichkeit mit der zweiten Kommunikationseinheit autorisiert werden. Hierdurch können beispielsweise neu in das System aufgenommene erste Kommunikationseinheiten autorisiert und somit in ein vorhandenes System integriert werden.

Eine beispielhafte Anwendung kann die Autorisierung von ersten Kommunikationseinheiten, wie beispielsweise Schnurlostelefonen oder schnurgebundenen Telefonen, an ein entsprechend ausgestattetes System unter Verwendung einer DECT(Digital Enhanced Cordless Telecommunications)-Anmeldeprozedur sein. Hierdurch können beispielsweise Telefonanlagen auf einfache Art und Weise mit all ihren Kommunikationseinheiten in Betrieb genommen werden. Gleiches gilt für die Nachrüstung entsprechender bereits vorhandener Systeme und den Austausch von einzelnen ersten Kommunikationseinheiten eines solchen Systems.

Eine weitere beispielhafte Anwendung kann die Autorisierung von ersten Kommunikationseinheiten in Form von Sensoreinrichtungen eines Systems zur Überwachung des Zustands eines Gebäudes sein. Ein solches System kann als Sensoreinrichtungen beispielsweise Türsensoren, Fenstersensoren, Bewegungsmelder, Funksteckdosen, Rauchmelder, Wassersensoren und/oder Videokameras aufweisen. Diese ersten Kommunikationseinheiten können jeweils über den erfindungsgemäßen bidirektionalen und kabellosen Datenaustausch mit einer zweiten Kommunikationseinheit, beispielsweise einer Basisstation des Systems, autorisiert und somit auf einfache Art und Weise in das System integriert werden, ohne dass hierfür Autorisierungsschritte manuell vorgenommen werden müssten. Auch kann auf diese Art und Weise ein Mobilfunkendgerät, wie beispielsweise ein Smartphone oder ein Tablet-Computer, in dieses System integriert werden, über das der aktuelle Zustand des Gebäudes abrufbar ist.

Durch die erfindungsgemäße bidirektionale Kommunikation zwischen den Kommunikationseinheiten des Systems können beispielsweise auch Zustandsparameter, wie beispielsweise die Zustandsparameter "angemeldet", "abgemeldet" oder der jeweilige Ladezustand einer Kommunikationseinheit, der zweiten Kommunikationseinheit von der ersten Kommunikationseinheit und/oder Zustandsparameter der ersten Kommunikationseinheit von der zweiten Kommunikationseinheit abgefragt werden. Dies kann beispielsweise bei Systemen sinnvoll sein, die keinen direkten Zugang zu einem Netzwerk, wie beispielsweise dem Internet, haben.

Das System kann beispielsweise auch für eine "closed loop authentification" von Kommunikationseinheiten verwendet werden. Hierzu ist sowohl die erste Kommunikationseinheit als auch die zweite Kommunikationseinheit mit einem Netzwerk verbunden. Die zweite Kommunikationseinheit kann der ersten Kommunikationseinheit ihre IP-Adresse, Sicherheitsschlüssel oder dergleichen über Datensignale mitteilen, welche von der ersten Kommunikationseinheit über das Netzwerk verwendet werden können. Auf diese Weise können beide Kommunikationseinheiten über die "closed loop authentification" gegeneinander authentifiziert werden.

Als weitere beispielhafte Anwendung des Systems ist seine Ausgestaltung als Eintrittssystem möglich. Nutzer eines solchen Systems tragen eine erste Kommunikationseinheit bei sich. Um seine Eintrittsberechtigung anzuzeigen, kann in einem Eintrittsbereich eine zweite Kommunikationseinheit angeordnet sein, welche den erfindungsgemäßen bidirektionalen und kabellosen Datenaustausch mit der ersten Kommunikationseinheit eines Nutzers durchführen kann, um die Berechtigung des Nutzers zu prüfen.

In vorteilhafter Ausgestaltung der Erfindung ist die Sendeeinrichtung zur Aussendung der Datensignale durch den Sensorbildschirm gebildet und die Einrichtung zur Erfassung der Datensignale als Einrichtung zur Erfassung optischer Signale ausgebildet. Hiernach muss an der ersten Kommunikationseinheit neben dem ohnehin vorhandenen Sensorbildschirm keine zusätzliche Sendeeinrichtung zur Aussendung der Datensignale angeordnet werden.

Nach einer weiteren vorteilhaften Ausgestaltung der Erfindung sind die Datensignale durch von dem Sensorbildschirm erzeugte Lichtimpulse und/oder Farbcodierungen gebildet. Hierdurch lassen sich unterschiedliche Datensignalarten erzeugen, um das System an die jeweiligen Gegebenheiten und Anforderungen anpassen zu können.

Gemäß einer weiteren vorteilhaften Ausgestaltung der Erfindung umfasst die Einrichtung zur Erfassung optischer Signale wenigstens eine Fotodiode. Auch kann die Einrichtung zur Erfassung optischer Signale zwei oder mehrere Fotodioden aufweisen. Die Verwendung von Fotodioden stellt eine kostengünstige und robuste Ausgestaltung der zweiten Kommunikationseinheit dar.

Eine weitere vorteilhafte Ausgestaltung der Erfindung sieht vor, dass die Sendeeinrichtung zur Aussendung der Datensignale durch einen an der ersten Kommunikationseinheit angeordneten Lautsprecher gebildet ist und dass die Einrichtung zur Erfassung der Datensignale als Einrichtung zur Erfassung akustischer Signale ausgebildet ist. Hierdurch kann zumindest ein die beiden Kommunikationseinheiten miteinander verbindender akustischer Kommunikationskanal ausgebildet werden, über den die jeweilige Datenübertragung zwischen den Kommunikationseinheiten erfolgen kann. Es ist zudem möglich, dass die Übertragung der Datensignale von der ersten Kommunikationseinheit wahlweise sowohl über optische Signale als auch über akustische Signale erfolgen kann, wozu die erste Kommunikationseinheit und die zweite Kommunikationseinheit entsprechend auszubilden sind.

Nach einer weiteren vorteilhaften Ausgestaltung erfolgt die Datenübertragung zwischen der ersten Kommunikationseinheit und der zweiten Kommunikationseinheit ausschließlich dann, wenn sich die erste Kommunikationseinheit in körperlichem Kontakt mit der zweiten Kommunikationseinheit befindet. Dies kann dadurch bewirkt werden, dass der Sensorbildschirm erst in einem durch den körperlichen Kontakt zwischen den beiden Kommunikationseinheiten definierten Abstand des Sensorbildschirms zu der Einrichtung zur Stimulierung des Sensorbildschirms von dieser Einrichtung stimulierbar ist, also die Wirkreichweite dieser Einrichtung entsprechend begrenzt ist. Durch eine derartig kurze Wirkreichweite der Einrichtung zur Stimulierung des Sensorbildschirms kann vermieden werden, dass die von der zweiten Kommunikationseinheit ausgehenden Datensignale unerlaubt von Dritten erfasst und abgehört werden. Somit ist diese Datenübertragung sehr sicher.

Vorteilhafterweise ist der körperliche Kontakt durch ein Auflegen der ersten Kommunikationseinheit auf die zweite Kommunikationseinheit oder der zweiten Kommunikationseinheit auf die erste Kommunikationseinheit herstellbar. Dies geht mit einem sehr einfachen und intuitiven Gebrauch des erfindungsgemäßen Systems einher, insbesondere bei dessen Inbetriebnahme und Anpassung an den jeweiligen Anwendungsfall. Um ein System neu einzurichten oder ein vorhandenes System mit einer weiteren ersten Kommunikationseinheit nachzurüsten, muss die wenigstens eine erste Kommunikationseinheit lediglich für eine bestimmte Zeit auf die zweite Kommunikationseinheit aufgelegt werden, um zum Gebrauch innerhalb des Systems autorisiert zu werden.

Nach einer weiteren vorteilhaften Ausgestaltung der Erfindung erfolgt zumindest die Datenübertragung von der zweiten Kommunikationseinheit an die erste Kommunikationseinheit automatisch, wenn sich die erste Kommunikationseinheit in körperlichem Kontakt mit der zweiten Kommunikationseinheit befindet. Dieser Datenaustausch muss hiernach also nicht manuell, beispielsweise durch manuelle Betätigung eines Betätigungsmittels, initiiert werden, was die Handhabung des Systems weiter vereinfacht. Die zweite Kommunikationseinheit kann hierzu mit einer Einrichtung zur Erfassung eines hergestellten körperlichen Kontaktes zwischen der ersten Kommunikationseinheit und der zweiten Kommunikationseinheit ausgerüstet sein. Sobald diese Einrichtung einen körperlichen Kontakt zwischen den Kommunikationseinheiten erfasst, kann über geeignete elektronische Steuermittel der zweiten Kommunikationseinheit die Einrichtung zur Stimulierung des Sensorbildschirms auf gewünschte Art und Weise angesteuert werden. Alternativ kann von der Einrichtung zur Stimulierung des Sensorbildschirms kontinuierlich ein bestimmtes Stimulierungsfeld erzeugt werden, welches den Sensorbildschirm wie gewünscht stimuliert, sobald der Sensorbildschirm in die Reichweite des Stimulierungsfeldes gelangt.

Gemäß einer weiteren vorteilhaften Ausgestaltung der Erfindung ist vorgesehen, dass sich die erste Kommunikationseinheit durch die Datenübertragung von der ersten Kommunikationseinheit an die zweite Kommunikationseinheit authentisiert und dass die erste Kommunikationseinheit durch die Datenübertragung von der zweiten Kommunikationseinheit an die erste Kommunikationseinheit authentifizierbar ist. Zusätzlich oder alternativ kann es von Vorteil sein, wenn sich die zweite Kommunikationseinheit durch die Datenübertragung von der zweiten Kommunikationseinheit an die erste Kommunikationseinheit authentisiert und die erste Kommunikationseinheit durch die Datenübertragung von der ersten Kommunikationseinheit an die zweite Kommunikationseinheit authentifizierbar ist. Hierdurch kann eine Autorisierung der Kommunikationseinheiten durchgeführt werden. Durch den erfindungsgemäßen bidirektionalen und kabellosen Datenaustausch zwischen den beiden Kommunikationseinheiten wird dem Systems somit ein hoher Maß an Sicherheit gegen unerlaubte Zugriffe auf das System verliehen, was bei Systemen, bei denen lediglich eine unidirektionale Kommunikation zwischen Kommunikationseinheiten stattfindet, nicht gewährleistet ist.

Nach einer weiteren vorteilhaften Ausgestaltung ist die Datenübertragung von der ersten Kommunikationseinheit an die zweite Kommunikationseinheit und/oder die Datenübertragung von der zweiten Kommunikationseinheit an die erste Kommunikationseinheit zwei- oder mehrkanalig. Hierdurch kann der Datenübertragung eine größere Bandbreite verliehen werden, was die Übertragung komplexer Informationen ermöglicht.

Eine weitere vorteilhafte Ausgestaltung der Erfindung sieht vor, dass die erste Kommunikationseinheit ein Mobilfunkendgerät ist. Vorzugsweise ist das Mobilfunkendgerät ein Smartphone oder ein Tablet-Computer ist.

Gemäß einer weiteren vorteilhaften Ausgestaltung ist der Sensorbildschirm ein kapazitiver Sensorbildschirm und die Einrichtung zur Stimulierung des Sensorbildschirms zur Erzeugung von Kapazitätsänderungen am Sensorbildschirm eingerichtet. Derartige Kapazitätsänderungen lassen sich unter Verwendung relativ kostengünstiger Komponenten für die zweite Kommunikationseinheit erzeugen.

Nachfolgend wird die Erfindung unter Bezugnahme auf die anliegenden Zeichnungen anhand bevorzugter Ausführungsformen näher erläutert.

Es zeigen
- Fig. 1: eine schematische Darstellung eines Ausführungsbeispiels für das erfindungsgemäße System und
- Fig. 2: eine schematische Darstellung eines Ausführungsbeispiels für eine mit einer ersten Kommunikationseinheit in körperlichem Kontakt stehenden zweiten Kommunikationseinheit.

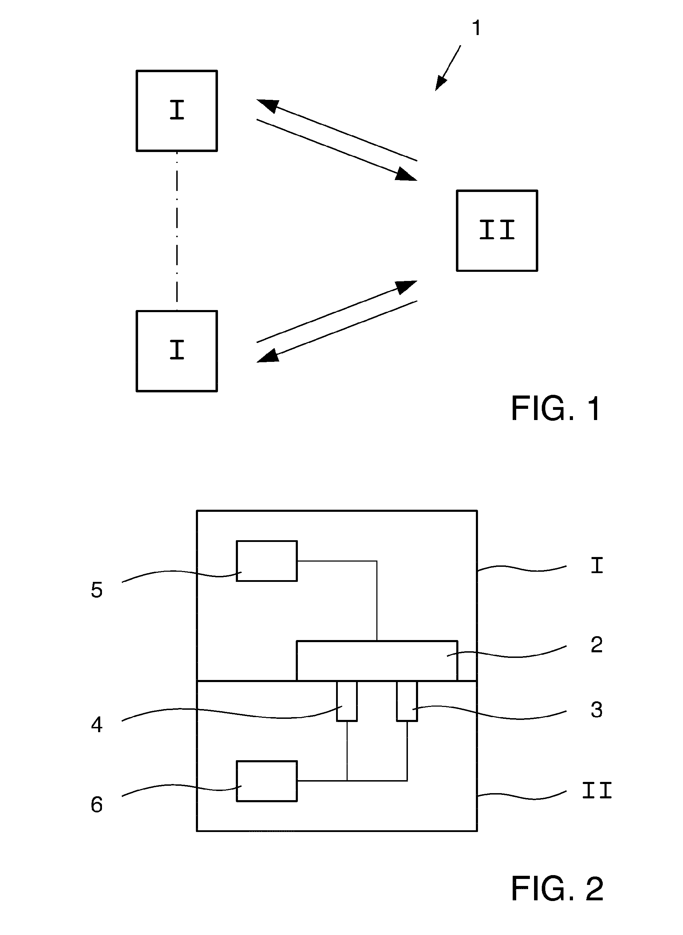

Figur 1 zeigt eine schematische Darstellung eines Ausführungsbeispiels für das erfindungsgemäße System 1. Das System 1 umfasst mehrere erste Kommunikationseinheiten I die jeweils einen in Figur 2 gezeigten Sensorbildschirm 2 aufweisen. Des Weiteren weist das System 1 eine zweite Kommunikationseinheit II auf, die eine in Figur 2 gezeigte Einrichtung 3 zur Stimulierung des Sensorbildschirms 2 aufweist. Die ersten Kommunikationseinheiten I sind kommunikationstechnisch mit der zweiten Kommunikationseinheit II verbindbar. Ist eine erste Kommunikationseinheit I kommunikationstechnisch mit der zweiten Kommunikationseinheit II verbunden, kann ein bidirektionaler und kabelloser Datenaustausch zwischen diesen beiden Kommunikationseinheiten I und II erfolgen, was durch die Pfeile in Figur 1 angedeutet sein soll. Sowohl die ersten Kommunikationseinheiten I als auch die zweite Kommunikationseinheit II können mit einem nicht dargestellten Netzwerk verbunden sein.

Figur 2 zeigt eine schematische Darstellung eines Ausführungsbeispiels für eine mit einer ersten Kommunikationseinheit I in körperlichem Kontakt stehenden zweiten Kommunikationseinheit II. Der körperliche Kontakt zwischen der ersten Kommunikationseinheit I und der zweiten Kommunikationseinheit II wird dadurch hergestellt, dass die erste Kommunikationseinheit I auf die zweite Kommunikationseinheit II aufgelegt ist.

Die erste Kommunikationseinheit I weist eine als Sensorbildschirm 2 ausgestaltete Sendeeinrichtung zur Aussendung von Datensignalen auf. Die zweite Kommunikationseinheit II weist eine Einrichtung 4 zur Erfassung dieser Datensignale auf, die als Einrichtung zur Erfassung optischer Signale ausgebildet ist. Das System 1 ist eingerichtet, Datensignale von der zweiten Kommunikationseinheit II über die Einrichtung 3 zur Stimulierung des Sensorbildschirms 2 und den Sensorbildschirm 2 an die erste Kommunikationseinheit I und Datensignale von der ersten Kommunikationseinheit I über den Sensorbildschirm 2 und die Einrichtung 4 zur Erfassung der Datensignale an die zweite Kommunikationseinheit II zu übertragen. Hierzu ist der Sensorbildschirm 2 mit einer elektronischen Steuereinrichtung 5 der ersten Kommunikationseinheit I verbunden. Die Einrichtung 4 zur Erfassung der Datensignale und die Einrichtung 3 zur Stimulierung des Sensorbildschirms 2 sind mit einer elektronischen Steuereinrichtung 6 der zweiten Kommunikationseinheit II verbunden.

### Bezugszeichenliste

| | |
|---|---|
| System | 1 |
| Sensorbildschirm | 2 |
| Einrichtung | 3 |
| Einrichtung | 4 |
| Steuereinrichtung | 5 |
| Steuereinrichtung | 6 |
| erste Kommunikationseinheit | I |
| zweite Kommunikationseinheit | II |

## Patentansprüche

1. System (1) mit wenigstens zwei kommunikationstechnisch miteinander verbindbaren Kommunikationseinheiten (I, II), wobei wenigstens eine erste Kommunikationseinheit (I) zumindest einen Sensorbildschirm (2) und wenigstens eine zweite Kommunikationseinheit (II) zumindest eine Einrichtung (3) zur Stimulierung des Sensorbildschirms (2) aufweist, **dadurch gekennzeichnet, dass** die erste Kommunikationseinheit (I) wenigstens eine Sendeeinrichtung zur Aussendung von Datensignalen und die zweite Kommunikationseinheit (II) wenigstens eine Einrichtung (4) zur Erfassung dieser Datensignale aufweist, wobei das System (1) eingerichtet ist, Datensignale von der zweiten Kommunikationseinheit (II) über die Einrichtung (3) zur Stimulierung des Sensorbildschirms (2) und den Sensorbildschirm (2) an die erste Kommunikationseinheit (I) und Datensignale von der ersten Kommunikationseinheit (I) über die Sendeeinrichtung zur Aussendung der Datensignale und die Einrichtung (4) zur Erfassung der Datensignale an die zweite Kommunikationseinheit (II) zu übertragen.

2. System (1) nach Anspruch 1, **dadurch gekennzeichnet, dass** die Sendeeinrichtung zur Aussendung der Datensignale durch den Sensorbildschirm (2) gebildet ist und dass die Einrichtung (4) zur Erfassung der Datensignale als Einrichtung zur Erfassung optischer Signale ausgebildet ist.

3. System (1) nach Anspruch 2, **dadurch gekennzeichnet, dass** die Datensignale durch von dem Sensorbildschirm (2) erzeugte Lichtimpulse und/oder Farbcodierungen gebildet sind.

4. System (1) nach Anspruch 2 oder 3, **dadurch gekennzeichnet, dass** die Einrichtung (4) zur Erfassung optischer Signale wenigstens eine Fotodiode umfasst.

5. System (1) nach einem der vorhergehenden Ansprüche, **dadurch gekennzeichnet, dass** die Sendeeinrichtung zur Aussendung der Datensignale durch einen an der ersten Kommunikationseinheit (I) angeordneten Lautsprecher gebildet ist und dass die Einrichtung (4) zur Erfassung der Datensignale als Einrichtung zur Erfassung akustischer Signale ausgebildet ist.

6. System (1) nach einem der vorhergehenden Ansprüche, **dadurch gekennzeichnet, dass** die Datenübertragung zwischen der ersten Kommunikationseinheit (I) und der zweiten Kommunikationseinheit (II) ausschließlich dann erfolgt, wenn sich die erste Kommunikationseinheit (I) in körperlichem Kontakt mit der zweiten Kommunikationseinheit (II) befindet.

7. System (1) nach Anspruch 6, **dadurch gekennzeichnet, dass** der körperliche Kontakt durch ein Auflegen der ersten Kommunikationseinheit (I) auf die zweite Kommunikationseinheit (II) oder der zweiten Kommunikationseinheit (II) auf die erste Kommunikationseinheit (I) herstellbar ist.

8. System (1) nach Anspruch 6 oder 7, **dadurch gekennzeichnet, dass** zumindest die Datenübertragung von der zweiten Kommunikationseinheit (II) an die erste Kommunikationseinheit (I) automatisch erfolgt, wenn sich die erste Kommunikationseinheit (I) in körperlichem Kontakt mit der zweiten Kommunikationseinheit (II) befindet.

9. System (1) nach einem der vorhergehenden Ansprüche, **dadurch gekennzeichnet, dass** sich die erste Kommunikationseinheit (I) durch die Datenübertragung von der ersten Kommunikationseinheit (I) an die zweite Kommunikationseinheit (II) authentisiert und dass die erste Kommunikationseinheit (I) durch die Datenübertragung von der zweiten Kommunikationseinheit (II) an die erste Kommunikationseinheit (I) authentifizierbar ist.

10. System (1) nach einem der vorhergehenden Ansprüche, **dadurch gekennzeichnet, dass** sich die zweite Kommunikationseinheit (II) durch die Datenübertragung von der zweiten Kommunikationseinheit (II) an die erste Kommunikationseinheit (I) authentisiert und dass die erste Kommunikationseinheit (I) durch die Datenübertragung von der ersten Kommunikationseinheit (I) an die zweite Kommunikationseinheit (II) authentifizierbar ist.

11. System (1) nach einem der vorhergehenden Ansprüche, **dadurch gekennzeichnet, dass** die Datenübertragung von der ersten Kommunikationseinheit (I) an die zweite Kommunikationseinheit (II) und/oder die Datenübertragung von der zweiten Kommunikationseinheit (II) an die erste Kommunikationseinheit (I) zwei- oder mehrkanalig ist.

12. System (1) nach einem der vorhergehenden Ansprüche, **dadurch gekennzeichnet, dass** die erste Kommunikationseinheit (I) ein Mobilfunkendgerät ist.

13. System (1) nach Anspruch 12, **dadurch gekennzeichnet, dass** das Mobilfunkendgerät ein Smartphone oder ein Tablet-Computer ist.

14. System (1) nach einem der vorhergehenden Ansprüche, **dadurch gekennzeichnet, dass** der Sensorbildschirm (2) ein kapazitiver Sensorbildschirm (2) ist und dass die Einrichtung (3) zur Stimulierung des Sensorbildschirms (2) zur Erzeugung von Kapazitätsänderungen am Sensorbildschirm (2) eingerichtet ist.
